(19) Europäisches Patentamt
European Patent Office
Office européen des brevets

(11) **EP 4 424 400 A1**

(12) **EUROPEAN PATENT APPLICATION**
published in accordance with Art. 153(4) EPC

(43) Date of publication:
**04.09.2024   Bulletin 2024/36**

(21) Application number: **22886831.1**

(22) Date of filing: **19.10.2022**

(51) International Patent Classification (IPC):
**B01D 39/16** (2006.01)     **B01D 46/52** (2006.01)
**B01D 46/62** (2022.01)

(52) Cooperative Patent Classification (CPC):
**B01D 39/16; B01D 46/52; B01D 46/62**

(86) International application number:
**PCT/JP2022/038989**

(87) International publication number:
**WO 2023/074503 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **26.10.2021   JP 2021174392**

(71) Applicant: **YAMASHIN-FILTER CORP.
Yokohama-shi, Kanagawa 231-0062 (JP)**

(72) Inventors:
• **HIROTA, Shoji
  Yokosuka-shi, Kanagawa 237-0062 (JP)**
• **AIDA, Koki
  Yokosuka-shi, Kanagawa 237-0062 (JP)**
• **OSHITA, Tatsuhiro
  Yokosuka-shi, Kanagawa 237-0062 (JP)**
• **TAOGUCHI, Shinichi
  Yokosuka-shi, Kanagawa 237-0062 (JP)**

(74) Representative: **Hasegawa, Kan
Patentanwaltskanzlei Hasegawa
Untere Hauptstraße 56
85354 Freising (DE)**

(54)   **FILTER**

(57)     Damage is not caused even when oil mist in a gas is trapped, and clogging of a filter paper due to an oil film can be less likely to occur. A filtration member formed by folding a filter paper for trapping oil mist in a gas into a corrugated shape in which mountain folds and valley folds are alternately repeated is provided. The filter paper includes a nanofiber layer formed of polyolefin fibers. In the nanofiber layer, a content of fibers having a fiber diameter of 0.2 $\mu$m to 0.4 $\mu$m is 3% or more, a content of fibers having a fiber diameter of 0.4 $\mu$m to 0.6 $\mu$m is 24% or more, a content of fibers having a fiber diameter of 0.6 $\mu$m to 0.8 $\mu$m is 15% or more, and a content of fibers having a fiber diameter of 0.8 $\mu$m to 1.0 $\mu$m is 9% or more.

FIG. 2

**EP 4 424 400 A1**

**Description**

Technical Field

The present invention relates to a filter.

Background Art

Patent Literature 1 discloses a filtration medium including a thermally bonded sheet, the sheet including (a) about 20 to 80 wt% of a bicomponent binder fiber having a fiber diameter of about 5 to 50 $\mu$m and a fiber length of about 0.1 to 15 cm; and (b) about 20 to 80 wt% of a glass fiber having a fiber diameter of about 0. 1 to 30 $\mu$m and an aspect ratio of about 10 to 10000.

Patent Literature 2 discloses a coalescing filtration medium only including a nanofiber web of at least one nanofiber layer of continuous, substantially polyolefin-free, polymeric nanofibers.

Citation List

Patent Literature

Patent Literature 1: JP 2008-518772 T

Summary of Invention

Technical Problem

However, in the invention described in Patent Literature 1, since the glass fiber is used for the sheet (filter paper), when a concentration of oil mist contained in a gas to be filtered is high, the filter paper may swell and soften by absorbing the oil mist, causing damage to the filter paper.

In the invention described in Patent Literature 2, since the polymeric nanofiber is used instead of the glass fiber, there is no possibility of damage. However, in the invention described in Patent Literature 2, since polyolefin is not contained, an oil film may be formed and clogging of the filter paper may occur, increasing pressure loss.

The present invention has been made in view of the circumstances, and an object of the present invention is to provide a filter in which damage is not caused even when oil mist in a gas is trapped, and clogging of the filter paper due to an oil film does not occur.

Solution to Problem

In order to solve the problem, a filter according to the present invention includes, for example, a filtration member formed by folding a filter paper for trapping oil mist in a gas into a corrugated shape in which mountain folds and valley folds are alternately repeated. The filter paper includes a nanofiber layer formed of polyolefin fibers. In the nanofiber layer, a content of fibers having a fiber diameter of 0.2 $\mu$m to 0.4 $\mu$m is 3% or more, a content of fibers having a fiber diameter of 0.4 $\mu$m to 0.6 $\mu$m is 24% or more, a content of fibers having a fiber diameter of 0.6 $\mu$m to 0.8 $\mu$m is 15% or more, and a content of fibers having a fiber diameter of 0.8 $\mu$m to 1.0 $\mu$m is 9% or more. Accordingly, damage is not caused even when the oil mist in the gas is trapped, and clogging of the filter paper due to the oil film is less likely to occur. Further, the filtration member may have a filtration efficiency of 95% or more for particles of 0.3 $\mu$m.

The nanofiber layer may contain fibers having a fiber diameter of 1 $\mu$m or more by 6% or more of all fibers. This increases the strength of the nanofiber layer. Further, voids in the nanofiber layer can be secured and the pressure loss can be reduced.

The filter paper may include a sheet-like aggregate provided adjacent to a first surface of the sheet-like nanofiber layer, and a sheet-like protective material provided adjacent to a second surface of the sheet-like nanofiber layer on a side opposite to the first surface. The aggregate, the nanofiber layer, and the protective material may be integrated by being welded at regular intervals. This facilitates processing of the filter paper. Further, the strength of the filter paper can be increased by a welded portion.

The nanofiber layer may have a basis weight of 54 g/m$^2$ to 59 g/m$^2$, a thickness of 0.41 mm to 0.5 mm, and a density of 0.11 g/cm$^3$ to 0.135 g/cm$^3$. As a result, the filtration efficiency of the filtration member can be 95% or more for particles of 0.3 $\mu$m.

The filter may include a first filtration section including the filtration member, and a second filtration section including a second filtration member, the second filtration member formed by folding a second filter paper, which is different from the filter paper, into a corrugated shape in which mountain folds and valley folds are alternately repeated. The second filtration section may have a filtration efficiency different from a filtration efficiency of the first filtration section. One of the first filtration section and the second filtration section having a lower filtration efficiency may be provided at an upstream side. This allows for a longer service life.

Advantageous Effects of Invention

With the present invention, damage is not caused even when the oil mist in the gas is trapped, and clogging of the filter paper due to the oil film is less likely to occur.

Brief Description of Drawings

FIG. 1 is a perspective view illustrating an outline of a filter 1.
FIG. 2 is a cross-sectional view illustrating an outline of a filter paper 11.
FIG. 3 is a plan view illustrating the outline of the filter paper 11.
FIG. 4 shows results of measuring fiber diameters of nanofiber layers of Examples 1 to 8.
FIG. 5 shows results of measuring fiber diameters of nanofiber layers of Examples 1 to 8.
FIG. 6 is a diagram illustrating an outline of filtration members 10-1, 10-2 according to a modification.
FIG. 7 is a diagram illustrating an outline of a filter 1A according to a modification.
FIG. 8 is a side view illustrating an outline of a filter 2.

Description of Embodiments

Hereinafter, embodiments of the present invention will be described in detail with reference to the drawings.

First Embodiment

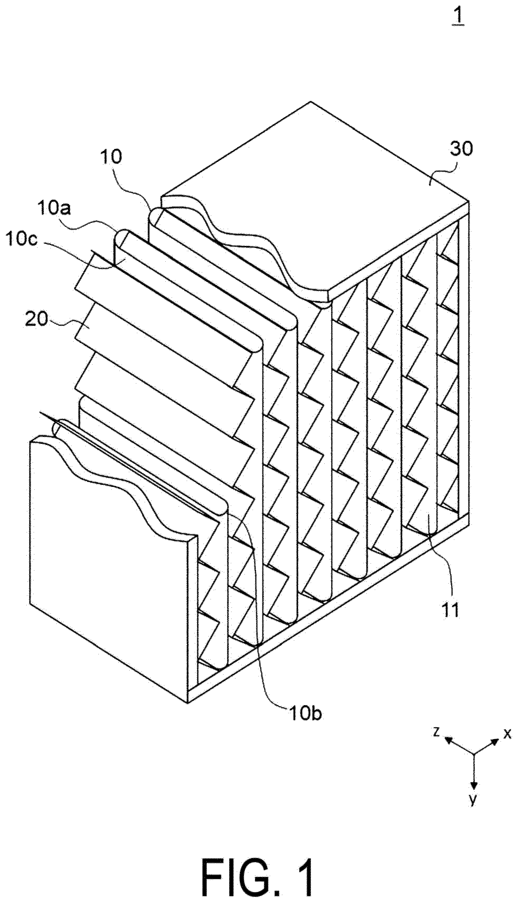

FIG. 1 is a perspective view illustrating an outline of a filter 1 of the present invention. The filter 1 is an air filter that removes oil mist and dust from a gas (for example, air) using a filter paper for trapping the oil mist in the gas.
The filter 1 mainly includes a filtration member 10, corrugated plates 20, and a case 30. In FIG. 1, illustration is partially omitted for the sake of explanation. A z-direction is a direction in which the gas flows, and directions orthogonal to the z-direction are defined as an x-direction and a y-direction. The x-direction and the y-direction are orthogonal to each other.
The filtration member 10 is formed using the filter paper 11 for trapping the oil mist in the gas. The filtration member 10 is formed by folding the filter paper 11 into a corrugated shape in which mountain folds and valley folds are alternately repeated.
The filtration member 10 includes mountain fold portions 10a where the filter paper 11 is mountain-folded, valley fold portions 10b where the filter paper 11 is valley-folded, and plane portions 10c where the filter paper 11 extends in a planar shape, each of which is arranged between the mountain fold portion 10a and the valley fold portion 10b. The filter paper 11 will be described in detail later.
The corrugated plate 20 is made of resin, for example, and is formed into a corrugated shape by folding a plate-like member into a bellows shape. Note that the shape of the corrugated plate 20 is not limited thereto. For example, a case where a folding line is formed at a folding portion and a case where the folding line is not formed at the folding portion are included in a corrugated shape.
The filtration member 10 is formed by inserting the corrugated plates 20 into the filter paper 11 to fold the filter paper 11 into a corrugated shape, and the filtration member 10 and the corrugated plates 20 are bonded or the like to an inside of the case 30, thereby configuring the filter 1. In the filter 1, the mountain-folded or valley-folded portions of the corrugated plate 20 come into contact with the plane portion 10c. In other words, the corrugated plate 20 is inserted between the plane portions 10c, and the corrugated plate 20 serves as a spacer for fixing the plane portions 10c in a state where the plane portions 10c are spaced apart from each other. Since the corrugated plate 20 is formed into a corrugated shape, passing resistance when air passes through the filtration member 10 is reduced.

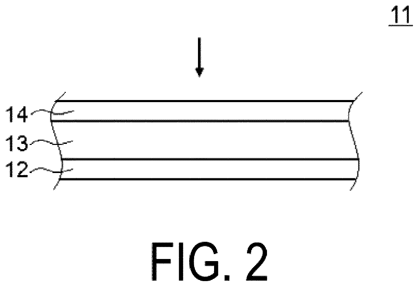

FIG. 2 is a cross-sectional view illustrating an outline of the filter paper 11. An arrow in FIG. 2 indicates a direction in which the gas containing the oil mist flows. The filter paper 11 mainly includes an aggregate 12, a nanofiber layer 13, and a protective material 14. The aggregate 12, the nanofiber layer 13, and the protective material 14 are laminated in the order of the aggregate 12, the nanofiber layer 13, and the protective material 14 from the downstream side of the air flow.

The aggregate 12 is a member serving as a base material for manufacturing the nanofiber layer 13, and is, for example, a nonwoven fabric of synthetic fibers. The aggregate 12 is formed by using fibers having a fiber diameter larger than a fiber diameter of the nanofiber layer 13, and has a void ratio higher than a void ratio of the nanofiber layer 13.

The nanofiber layer 13 is laminated on the aggregate 12 by a melt blowing method, a spunbonding method, or the like. In the present embodiment, the nanofiber layer 13 is formed by the melt blowing method. The melt blowing method is, for example, a method in which a molten thermoplastic resin is discharged from above to below in a high-temperature atmosphere, high-temperature and high-pressure air is blown toward the discharged thermoplastic resin from a horizontal direction to stretch the molten thermoplastic resin into a fibrous resin, and the fibrous resin blown off by the air is collected by a nonwoven fabric or the like.

In the present embodiment, the thermoplastic resin used for the nanofiber layer 13 is polyolefin. Among polyolefin fibers, it is preferable to use polypropylene fibers having high heat resistance and low specific gravity.

The protective material 14 is a member for protecting the nanofiber layer 13, and is, for example, a nonwoven fabric of synthetic fibers. The protective material 14 is formed using fibers having a larger fiber diameter than the fiber diameter of the nanofiber layer 13, and has a void ratio higher than the void ratio of the nanofiber layer 13. However, the protective material 14 is not necessarily required.

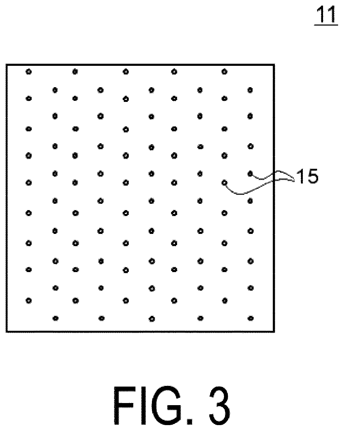

FIG. 3 is a plan view illustrating an outline of the filter paper 11. In FIG. 3, the filtration member 10 is viewed from the upstream side of the gas flow, and only the protective material 14 is visible. In FIG. 3, the filter paper 11 is partially illustrated.

The aggregate 12, the nanofiber layer 13, and the protective material 14 are integrated by being welded at regular intervals. Therefore, the filtration member 10 is provided with welded portions 15 at regular intervals. The aggregate 12, the nanofiber layer 13, and the protective material 14 are welded by ultrasonic waves, heat, or the like. In the present embodiment, the welded portion 15 is formed by embossing, but the processing method is not limited thereto.

The aggregate 12, the nanofiber layer 13, and the protective material 14 are not bonded by a binder, but are integrated only by the welded portions 15. Providing the welded portions 15 facilitates processing (mountain folding and valley folding) of the filter paper 11. Further, the welded portions 15 can increase the strength of the filter paper 11.

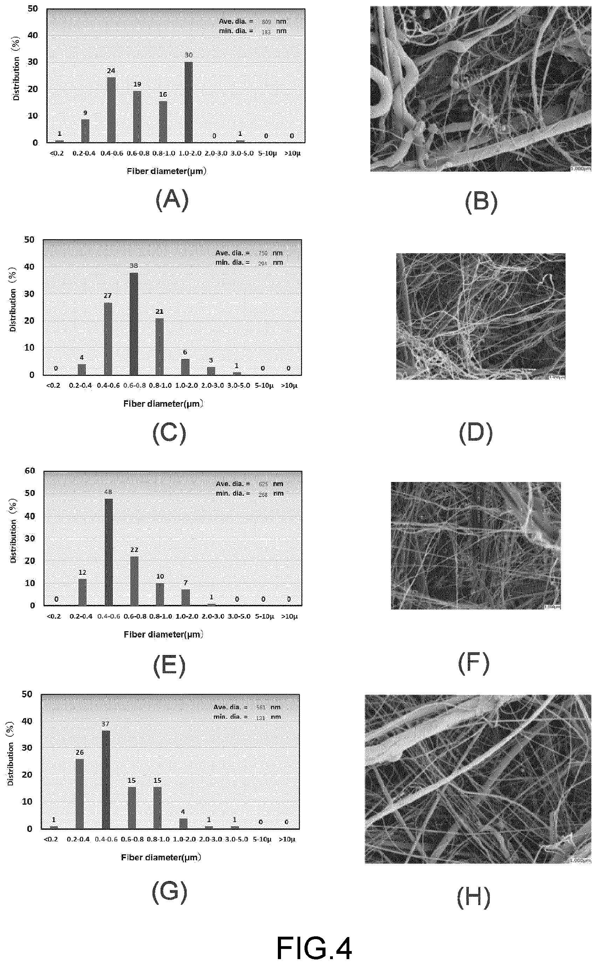

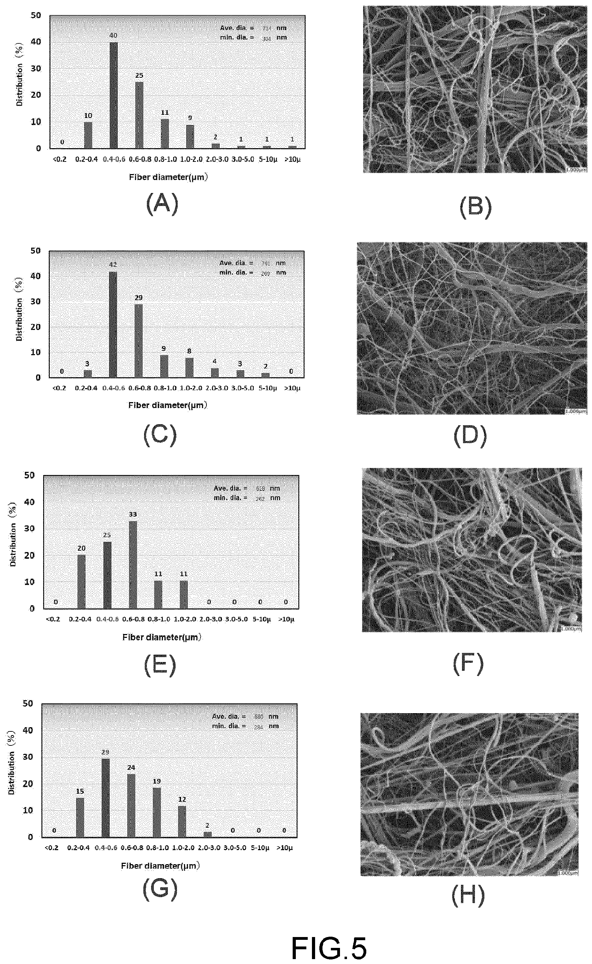

Here, the filter paper 11 and the nanofiber layer 13 will be described in detail with reference to FIGS. 4 and 5 and Tables 1 and 2. For nanofiber layers and filter papers of Examples 1 to 8, fiber diameters and basic performance (basis weight, thickness, density, pressure loss, and PF value) were measured or calculated. The filter papers of Examples 1 to 8 were produced using nanofiber layers of Examples 1 to 8, respectively.

Measurement of Fiber Diameter
Measuring Device
Sputter: MODEL MSP-1S Magnetron Sputter manufactured by Vacuum Device Inc.
Scanning electron microscope (SEM)
Main body: VHX-D510 manufactured by KEYENCE CORPORATION
Measurement system: VHX-950F manufactured by KEYENCE CORPORATION

Measurement and Calculation Method

Gold was vapor-deposited on a measurement sample by the sputtering device, and the diameters of 100 or more fibers included in the visual field were measured at a magnification (2500 to 3000 times) at which a little over 100 fibers were included in the visual field of the SEM. The distribution of each fiber diameter was calculated from the obtained data. When a fiber laminate with a width of about 1 m was divided into five portions in the width direction, the central portion (about 40 to 60 cm from the end) was used as a sample.

Then, the measured values of the fiber diameters were classified into classes less than 200 nm, from 200 nm to less than 400 nm, from 400 nm to less than 600 nm, from 600 nm to less than 800 nm, from 800 nm to less than 1000 nm, from 1 $\mu$m to less than 2 $\mu$m, from 2 $\mu$m to less than 3 $\mu$m, from 3 $\mu$m to less than 5 $\mu$m, from 5 $\mu$m to less than 10 $\mu$m, and 10 $\mu$m or more to obtain a relative frequency (%).

For each of the above classes, a class value of the class less than 200 nm was 200 nm, a class value of the class from 200 nm to less than 400 nm was 300 nm, a class value of the class from 400 nm to less than 600 nm was 550 nm, a class value of the class from 600 nm to 800 nm was 750 nm, a class value of the class from 800 nm to 1000 nm was 850 nm, a class value of the class from 1 $\mu$m to less than 2 $\mu$m was 1500 nm, a class value of the class from 2 $\mu$m to less than 3 $\mu$m was 2500 nm, a class value of the class from 3 $\mu$m to less than 5 $\mu$m was 4000 nm, a class value of the class from 5 $\mu$m to less than 10 $\mu$m was 7500 nm, and a class value of the class 10 $\mu$m or more was 10000 nm. The logarithmic mean value of the measured fiber diameters was defined as the average fiber diameter.

Measurement or Calculation of Basic Performance

Basis Weight

A sample cut into 10 cm squares was measured with a precision balance, and the mass (g) was divided by the area (0. 01 m$^2$) to calculate the basis weight.

Thickness

The thickness was measured using a thickness gauge (547-301) manufactured by Mitutoyo Corporation.

Density

The density was calculated from the basis weight and the thickness (the basis weight was divided by the thickness).

Pressure Loss

A filter paper in which an aggregate, a nanofiber layer, and a protective material were laminated in this order from the downstream side was set in a holder having an inside diameter of 113 mm (effective filtration member area of 100 cm$^2$), and velocity of air passing through the filter paper was adjusted to 5.3 cm/sec by a flow meter. Then, the pressure loss generated at this time at the upstream and the downstream of the filter paper was measured by a manometer.

Filtration Efficiency

Ater setting the filter paper in the same holder as the holder used in the measurement of the pressure loss, atmospheric dust was introduced to the upstream side of the filter paper, and air was passed through the filter paper at a flow rate of 5.3cm/sec to measure the number of particles having a diameter of 0.3 $\mu$m at the upstream and the downstream with a fine particle measuring instrument (MET ONE HHPC 3+, manufactured by Beckman Coulter, Inc.). The filtration efficiency was calculated by Equation (1).

$$\text{Filtration efficiency (\%)} = (1 - (CO/CI)) \times 100 \ ... \ (1)$$

CO = the number of particles of particles of 0.3 $\mu$m at the downstream side
CI = the number of particles of particles of 0.3 $\mu$m at the upstream side

In the measurements of the pressure loss and the filtration efficiency, the filter paper as the measurement sample was subjected to a static elimination process in advance. The static elimination of the filter paper was performed in accordance with 2) IPA saturated vapor exposure method of JIS B 9908: 2011 "Test method of air filtration sections for ventilation and electric air cleaners for ventilation" 5.2.3.3 d). Note that a base material and a covering material are formed of a coarse nonwoven fabric and have little influence on the pressure loss and the filtration efficiency.

PF Value

Using the pressure loss and the filtration efficiency (filtration efficiency of particles having a particle diameter of 0.3 $\mu$m), the PF value was calculated by Equation (2). The PF value is a value conventionally used as an index indicating a balance between a collection performance and the pressure loss of the filtration member for an air filter, and the better the performance, the larger the PF value.

$$\text{PF value (1/kPa)} =$$
$$\{-\log ((100 - \text{filtration efficiency (\%)})/100)\}/(\text{pressure loss (Pa)}/1000) \ ... \ (2)$$

Evaluation of Fiber Diameter and Basic Performance

Table 1 and FIGS. 4 and 5 show the results obtained by measuring the fiber diameters of the nanofiber layers of Examples 1 to 8. Table 2 is a diagram showing the basic performance of the filter papers of Examples 1 to 8.

FIGS. 4(A) and 4(B) illustrate the distribution of the fiber diameters and the image captured by SEM of the nanofibers of Example 1, FIGS. 4(C) and 4(D) illustrate the distribution of the fiber diameters and the image captured by SEM of the nanofibers of Example 2, FIGS. 4(E) and 4(F) illustrate the distribution of the fiber diameters and the image captured by SEM of the nanofibers of Example 3, FIGS. 4(G) and 4(H) illustrate the distribution of the fiber diameters and the image captured by SEM of the nanofibers of Example 4, FIGS. 5(A) and 5(B) illustrate the distribution of the fiber diameters and the image captured by SEM of the nanofibers of Example 5, FIGS. 5(C) and 5(D) illustrate the distribution of the fiber diameters and the image captured by SEM of the nanofibers of Example 6, FIGS. 5(E) and 5(F) illustrate the distribution of the fiber diameters and the image captured by SEM of the nanofibers of Example 7, and FIGS. 5(G) and 5(H) illustrate the distribution of the fiber diameters and the image captured by SEM of the nanofibers of Example 8.

[Table 1]

| Examples | Representative fiber diameter (nm) | | 1 Number of fibers (number) | 1 Proportion (%) | 2 Number of fibers (number) | 2 Proportion (%) | 3 Number of fibers (number) | 3 Proportion (%) | 4 Number of fibers (number) | 4 Proportion (%) | 5 Number of fibers (number) | 5 Proportion (%) | 6 Number of fibers (number) | 6 Proportion (%) | 7 Number of fibers (number) | 7 Proportion (%) | 8 Number of fibers (number) | 8 Proportion (%) |
|---|---|---|---|---|---|---|---|---|---|---|---|---|---|---|---|---|---|---|
| Fiber diameter (μ) | | | | | | | | | | | | | | | | | | |
| Measurement result | < 200 nm | 200 | 1 | 1.0 | 0 | 0.0 | 0 | 0.0 | 1 | 1.0 | 0 | 0.0 | 0 | 0.0 | 0 | 0.0 | 0 | 0.0 |
| | 200-400 nm | 300 | 9 | 8.7 | 4 | 4.0 | 13 | 11.9 | 27 | 26.0 | 10 | 10.0 | 3 | 3.0 | 21 | 20.4 | 15 | 14.7 |
| | 400-600 nm | 550 | 25 | 24.3 | 27 | 27.0 | 52 | 47.7 | 38 | 36.5 | 40 | 40.0 | 42 | 42.0 | 26 | 25.2 | 30 | 29.4 |
| | 600-800 nm | 750 | 20 | 19.4 | 38 | 38.0 | 24 | 22.0 | 16 | 15.4 | 25 | 25.0 | 29 | 29.0 | 34 | 33.0 | 24 | 23.5 |
| | 800-1000 nm | 850 | 16 | 15.5 | 21 | 21.0 | 11 | 10.1 | 16 | 15.4 | 11 | 11.0 | 9 | 9.0 | 11 | 10.7 | 19 | 18.6 |
| | 1-2 μm | 1500 | 31 | 30.1 | 6 | 6.0 | 8 | 7.3 | 4 | 3.8 | 9 | 9.0 | 8 | 8.0 | 11 | 10.7 | 12 | 11.8 |
| | 2-3 μm | 2500 | 0 | 0.0 | 3 | 3.0 | 1 | 0.9 | 1 | 1.0 | 2 | 2.0 | 4 | 4.0 | 0 | 0.0 | 2 | 2.0 |
| | 3-5 μm | 4000 | 1 | 1.0 | 1 | 1.0 | 0 | 0.0 | 1 | 1.0 | 1 | 1.0 | 3 | 3.0 | 0 | 0.0 | 0 | 0.0 |
| | 5-10 μm | 7500 | 0 | 0.0 | 0 | 0.0 | 0 | 0.0 | 0 | 0.0 | 1 | 1.0 | 2 | 2.0 | 0 | 0.0 | 0 | 0.0 |
| | > 10 μm | 10000 | 0 | 0.0 | 0 | 0.0 | 0 | 0.0 | 0 | 0.0 | 1 | 1.0 | 0 | 0.0 | 0 | 0.0 | 0 | 0.0 |
| | Total | | 103 | 100 | 100 | 100 | 109 | 100 | 104 | 100 | 100 | 100 | 100 | 100 | 103 | 100 | 102 | 100 |
| Proportion of fibers having fiber diameter of 1 μm or more(%) | | | 31.1 | | 10.0 | | 8.3 | | 5.8 | | 14.0 | | 17.0 | | 10.7 | | 13.7 | |
| Minimum fiber diameter (nm) | | | 183 | | 294 | | 268 | | 131 | | 304 | | 269 | | 262 | | 284 | |
| Average fiber diameter (nm) | | | 809 | | 750 | | 624 | | 561 | | 714 | | 791 | | 628 | | 680 | |

[Table 2]

| Examples | Filtration member (cover + nanolayer + base material) | | | | | | Nanolayer | | | | | Base material (PHW75) | | Cover material (P3030) | |
|---|---|---|---|---|---|---|---|---|---|---|---|---|---|---|---|
| | Basis weight [g/m2] | Thickness [mm] | Density [g/cm3] | Pressure loss [kPa] | Filtration efficiency at 0.3 $\mu$m | PF value [1/kPa] | Basis weight [g/m2] | Thickness [mm] | Density [g/cm3] | Average fiber diameter [nm] | Geometric standard deviation [-] | Basis weight [g/m2] | Thickness [mm] | Basis weight [g/m2] | Thickness [mm] |
| 1 | 160 | 0.987 | 0.162 | 0.1092 | 95.276 | 12.694 | 55 | 0.41 | 0.135 | 809 | 1.54 | 75 | 0.40 | 30 | 0.18 |
| 2 | 159 | 1.01 | 0.158 | 0.0952 | 95.938 | 14.946 | 54 | 0.43 | 0.126 | 750 | 1.47 | 75 | 0.40 | 30 | 0.18 |
| 3 | 155 | 1.05 | 0.148 | 0.115 | 95.484 | 12.934 | 56 | 0.47 | 0.120 | 625 | 1.46 | 75 | 0.40 | 30 | 0.1 8 |
| 4 | 164 | 1.08 | 0.152 | 0.1266 | 97.51 | 13.146 | 59 | 0.50 | 0.118 | 561 | 1.62 | 75 | 0.40 | 30 | 0.18 |
| 5 | 160 | 1.06 | 0.151 | 0.123 | 97.288 | 13.034 | 55 | 0.48 | 0.115 | 714 | 2.24 | 75 | 0.40 | 30 | 0.18 |
| 6 | 160 | 1.08 | 0.148 | 0.1132 | 96.15 | 12.806 | 55 | 0.50 | 0.110 | 791 | 2.04 | 75 | 0.40 | 30 | 0.18 |
| 7 | 160 | 1.05 | 0.153 | 0.1222 | 96.428 | 12.116 | 55 | 0.47 | 0.117 | 628 | 1.48 | 75 | 0.40 | 30 | 0.18 |
| 8 | 160 | 1.02 | 0.158 | 0.127 | 95.202 | 10.634 | 55 | 0.44 | 0.126 | 680 | 1.48 | 75 | 0.40 | 30 | 0.18 |

As shown in Table 1, the nanofiber layers of Examples 1 to 8 contained fibers having a fiber diameter of 0.2 $\mu$m to 0.4 $\mu$m by 3% or more of all fibers, contained fibers having a fiber diameter of 0.4 $\mu$m to 0.6 $\mu$m by 24% or more of all fibers, contained fibers having a fiber diameter of 0.6 $\mu$m to 0.8 $\mu$m by 15% or more of all fibers, and contained fibers having a fiber diameter of 0.8 $\mu$m to 1.0 $\mu$m by 9% or more of all fibers. By using such nanofiber layers, it is possible to have a filtration efficiency of 95% or more for particles of 0.3 $\mu$m (see Table 2).

The nanofiber layers of Examples 1 to 8 contained fibers having a fiber diameter of 1 $\mu$m or more by 6% or more of all fibers. When the nanofiber layer contains 6% or more of fibers having a fiber diameter of 1 $\mu$m or more, the strength of the nanofiber layer is increased. Further, voids in the nanofiber layer can be secured and the pressure loss can be reduced (0.127 kPa or less) (see Table 2). It can be confirmed that the voids in the nanofiber layer are secured from the fact that the densities of the nanofiber layers in Examples 1 to 8 are 0.135 g/m$^3$ or less. Further, from the SEM photographs of FIGS. 4 and 5, it is found that thick fibers are mixed in thin fibers in all Examples 1 to 8.

The nanofiber layers of Examples 1 to 8 had minimum fiber diameters of 304 nm or less and average fiber diameters of 561 nm to 809 nm.

As shown in Table 2, the nanofiber layers of Examples 1 to 8 had basis weights of 54 g/m$^2$ to 59 g/m$^2$, thicknesses of 0.41 mm to 0.5 mm, and densities of 0.11 g/cm$^3$ to 0.135 g/cm$^3$.

The filter papers of Examples 1 to 8 had basis weights of 155 g/m$^2$ to 160 g/m$^2$, thicknesses of 0. 987 mm to 1.08 mm, and densities of 0.148 g/cm$^3$ to 0.162 g/cm$^3$. The pressure losses were from 0.0952 kPa to 0.127 kPa, and the PF values were from 10.634 (1/kPa) to 14.946 (1/kPa). Furthermore, by using the nanofiber layers of Examples 1 to 8, the filter papers of Examples 1 to 8 had a filtration efficiency of 95% or more for particles of 0.3 $\mu$m.

With the present embodiment, since the nanofiber layer 13 is formed of polyolefin fibers, when oil mist in gas is trapped by the nanofiber layer 13, the polyolefin fibers absorb the oil component and swell, and the oil component does not remain on the fibers or between the fibers of the nanofiber layer 13, and thus an oil film is not formed. As a result, it is possible to prevent the nanofiber layer from being clogged due to the oil film and causing an increase in the pressure loss.

Further, with the present embodiment, since the nanofiber layer contains 6% or more of fibers having a fiber diameter of 1 $\mu$m or more, the strength of the nanofiber layer 13 is increased. In addition, it is possible to secure voids in the nanofiber layer 13 and the pressure loss can be reduced.

Further, with the present embodiment, since the aggregate 12, the nanofiber layer 13, and the protective material 14 are integrated by being welded at regular intervals, processing (mountain folding and valley folding) of the filter paper 11 is facilitated. Further, the welded portion 15 can increase the strength of the filter paper 11. In addition, it is not necessary to bond the aggregate 12, the nanofiber layer 13, and the protective material 14 by a binder.

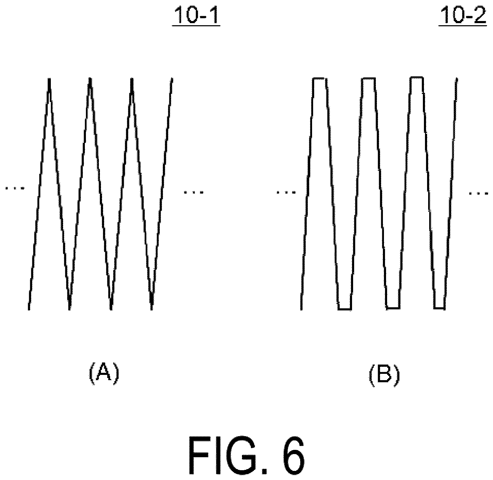

In the present embodiment, the filter paper 11 has an arc shape and no folding line is formed at the mountain fold portion 10a or the valley fold portion 10b. However, the mountain fold and the valley fold of the present invention include a case where a crease is an arc shape and no folding line is formed and a case where the folding line is formed at the mountain fold portion and the valley fold portion as in the filtration member 10-1 of FIG. 6(A). Further, as in the filtration member 10-2 of FIG. 6(B), a so-called box fold in which a plane is formed in the mountain fold portion 10a and the valley fold portion 10b is also included in the mountain fold and the valley fold of the present invention.

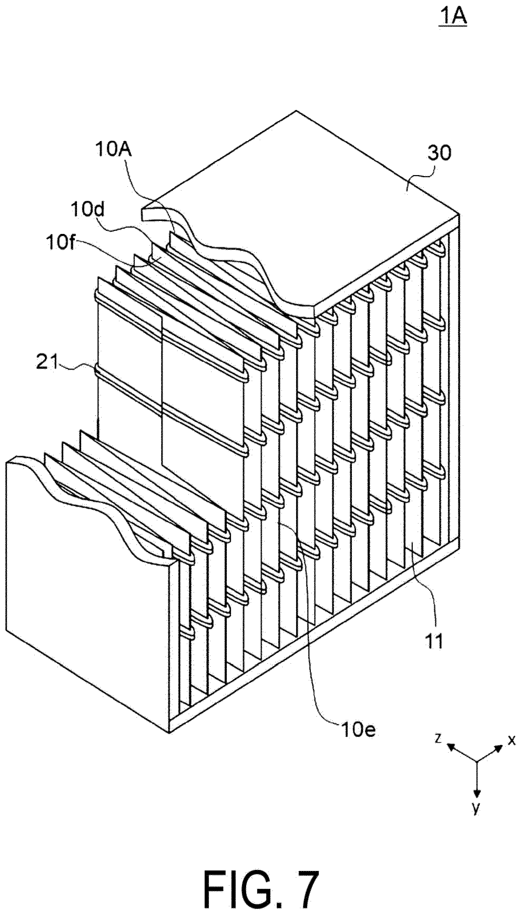

In the present embodiment, the filter paper 11 is folded into a corrugated shape in which mountain folds and valley folds are alternately repeated to form the filtration member 10, and the corrugated plates 20 are provided in the filter paper 11, but the configuration of the filtration member is not limited to this. FIG. 7 is a diagram illustrating an outline of a filter 1A according to a modification.

The filter 1A mainly includes a filtration member 10A, beads 21, and the case 30. The filtration member 10A is formed by folding the filter paper 11 into a corrugated shape in which mountain folds and valley folds are alternately repeated. The filtration member 10A includes mountain fold portions 10d where the filter paper 11 is mountain-folded, valley fold portions 10e where the filter paper 11 is valley-folded, and plane portions 10f where the filter paper 11 extends in a planar shape, each of which is arranged between the mountain fold portion 10d and the valley fold portion 10e. The folding lines are formed at the mountain fold portion 10d and the valley fold portion 10e.

The bead 21 is formed by applying hot melt or the like to a surface of the filter paper 11. By applying the beads 21, the filter paper 11 (plane portions 10f) is prevented from coming into close contact with itself, and the shape of the filtration member 10A is maintained in a state where the plane portions 10f are spaced apart by a predetermined pitch. In addition, the strength of the filtration member 10A can be increased.

The difference between the filters 1 and 1A is only in the shapes of the filtration members 10 and 10A, and there is almost no difference in properties. When the filter paper 11 in the same lot is used and the outer shape is substantially the same (same in height, width, and effective filtration area), both of the filters 1 and 1A have filtration efficiencies of 95% or more for particles of 0.3 $\mu$m.

Second Embodiment

Although only one filtration member is used in the first embodiment of the present invention, a plurality of filtration members may be used. The second embodiment of the present invention is a configuration in which the plurality of filtration members are used. Hereinafter, a filter 2 according to the second embodiment will be described below. Note that the same components as those in the first embodiment are denoted by the same reference numerals, and descriptions thereof will be omitted.

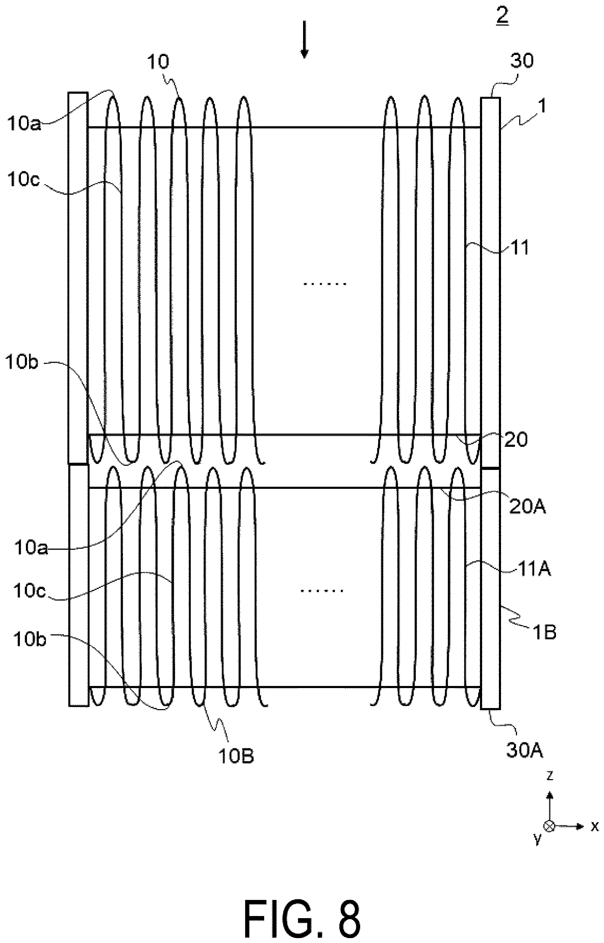

FIG. 8 is a side view illustrating an outline of the filter 2. Note that FIG. 7 illustrates a perspective view of a main part. The filter 2 mainly includes the filter 1 (corresponding to a first filtration section of the present invention) and a filter 1B (corresponding to a second filtration section of the present invention). The filter 1B is configured similarly to the filter 1, and mainly includes a filtration member 10B (corresponding to a second filtration member of the present invention), corrugated plates 20A, and a case 30A. The filter 1 and the filter 1B have different filtration efficiencies.

An arrow in FIG. 8 indicates a direction in which a gas containing oil mist flows. In FIG. 8, the filter 1B is provided at the downstream side of the filter 1. In FIG. 8, the filter 1B is lower than the filter 1 in height (dimension in the direction along the flow of the gas), but the height of the filter 1B and the height of the filter 1 may be substantially the same, or the height of the filter 1B may be lower than the height of the filter 1.

The filtration member 10B is formed using a filter paper 11A for trapping the oil mist in the gas. Similarly to the filtration member 10, the filtration member 10B is formed by folding the filter paper 11A into a corrugated shape in which mountain folds and valley folds are alternately repeated, and has the mountain fold portion 10a, the valley fold portion 10b, and the plane portion 10c. The filtration member 10B is formed by inserting the corrugated plates 20A into the filter paper 11A to fold the filter paper 11A into a corrugated shape, and the filtration member 10B and the corrugated plates 20A are bonded or the like to an inside of the case 30A, thereby configuring the filter 2.

In the filter paper 11A, the aggregate 12 and the protective material 14 are the same as (or may be different from) those of the filter paper 11, and a nanofiber layer is different from that of the filter paper 11. For example, a fiber diameter of the nanofiber layer of the filter paper 11A may be smaller than the fiber diameter of the nanofiber layer 13 of the filter paper 11 as a whole, and the filtration efficiency of the filtration member 10B (filtration efficiency of 99.97% or more for particles of 0.3 $\mu$m) may be higher than the filtration efficiency of the filtration member 10 (filtration efficiency of 95% or more for particles of 0.3 $\mu$m). The corrugated plate 20A and the case 30A are different from the corrugated plate 20 and the case 30 only in shape (size).

With the present embodiment, since the gas containing the oil mist passes through the two filters 1 and 1B having different filtration efficiencies in order, the load on the filter 1B can be reduced and the service life of the filter 2 can be extended. For example, when the filter 1B having a high filtration efficiency is used alone, clogging may occur in a short period of time. However, by disposing the filter 1 on the upstream side of the filter 1B, the filter 1 collects the oil mist and dust earlier than the filter 1B, and the load on the filter 1B is reduced, such that the filter 2 can have a longer service life (can be used for a longer time) than the filter 1B with the filtration efficiency of the filter 1B.

Although the filter 2 includes the two filters 1 and 1B in the present embodiment, the filter 2 only needs to include a plurality of filters (filtration sections) including the filter 1. For example, in the present embodiment, the filtration efficiency of the filter 1B (filtration member 10B) is higher than the filtration efficiency of the filter 1 (filtration member 10), but the filter 2 may include a filter having a filtration efficiency lower than the filtration efficiency of the filter 1 in addition to the filter 1. For example, a filter (filtration section) having a filtration efficiency lower than that of the filter 1 (for example, having a filtration efficiency of 90% or more for particles of 0.5 $\mu$m) may be disposed on the upstream side of the filter 1. As a result, particles having a large diameter can be collected by the filter on the upstream side, the load on the filter 1 can be reduced, and the service life of the filter can be extended.

The number of filters (filtration sections) included in the filter 2 is not limited to two, and a filter other than the filter 1 or 1B may be included. Thus, when a plurality of filters (filtration sections) are used, by gradually increasing the filtration efficiencies of the filtration members from the inflow side to the outflow side, dust and the like can be efficiently trapped by each filter, the load on filter at the downstream side can be reduced, and a longer service life can be achieved.

In the present embodiment, the filters 1 and 1B have the cases 30 and 30A, respectively, but the case may be common. Although the two filters 1 and 1B have the corrugated plates 20 and 20A, respectively, in the present embodiment, both of the two filters may have beads instead of the corrugated plates, or either one of the two filters may have the beads instead of the corrugated plates.

The embodiments of the invention are described above in detail with reference to the drawings. However, specific configurations are not limited to the embodiments and also include changes in design or the like without departing from the gist of the invention. A person skilled in the art can appropriately change, add, and convert each element in the embodiments.

Additionally, in the present invention, "substantially" is a concept not only including the case of being strictly the same, but also including an error and deformation to the extent that a loss of identity does not occur. For example, "substantially parallel" is not limited to the case of being strictly parallel, and is, for example, a concept including some errors. Further, for example, terms such as "parallel," "orthogonal," and the like include "substantially parallel," "substantially orthogonal," and the like, and are not intended to strictly include only the parallel state, orthogonal state, and the like. Additionally, in the present invention, "vicinity" means to include a region in a certain range (the range can be determined arbitrarily) near a reference position. For example, the case of expressing "in the vicinity of A" is a concept that a region in a certain range near A may include A or may not include A.

Reference Signs List

1, 1A, 1B, 2: Filter
10, 10-1, 10-2, 10A, 10B: Filtration member
10a, 10d: Mountain fold portion
10b, 10e: Valley fold portion
10c, 10f: Plane portion
11, 11A: Filter paper
12: Aggregate
13: Nanofiber layer
14: Protective material
15: Welded portion
20, 20A: Corrugated plate
21: Bead
30, 30A: Case

**Claims**

1. A filter, comprising

   a filtration member formed by folding a filter paper for trapping oil mist in a gas into a corrugated shape in which mountain folds and valley folds are alternately repeated, wherein
   the filter paper includes a nanofiber layer formed of polyolefin fibers, and
   in the nanofiber layer, a content of fibers having a fiber diameter of 0.2 $\mu$m to 0.4 $\mu$m is 3% or more, a content of fibers having a fiber diameter of 0.4 $\mu$m to 0.6 $\mu$m is 24% or more, a content of fibers having a fiber diameter of 0.6 $\mu$m to 0.8 $\mu$m is 15% or more, and a content of fibers having a fiber diameter of 0.8 $\mu$m to 1.0 $\mu$m is 9% or more.

2. The filter according to claim 1, wherein
   the filtration member has a filtration efficiency of 95% or more for particles of 0.3 $\mu$m.

3. The filter according to claim 1 or 2, wherein
   the nanofiber layer contains fibers having a fiber diameter of 1 $\mu$m or more by 6% or more of all fibers.

4. The filter according to any one of claims 1 to 3, wherein
   the filter paper includes:

   a sheet-like aggregate provided adjacent to a first surface of the sheet-like nanofiber layer; and
   a sheet-like protective material provided adjacent to a second surface of the sheet-like nanofiber layer on a side opposite to the first surface, and
   the aggregate, the nanofiber layer, and the protective material are integrated by being welded at regular intervals.

5. The filter according to any one of claims 1 to 4, wherein
   the nanofiber layer has a basis weight of 54 g/m$^2$ to 59 g/m$^2$, a thickness of 0.41 mm to 0.5 mm, and a density of 0.11 g/cm$^3$ to 0.135 g/cm$^3$.

6. The filter according to any one of claims 1 to 5, comprising:

   a first filtration section including the filtration member; and

a second filtration section including a second filtration member, the second filtration member formed by folding a second filter paper into a corrugated shape in which mountain folds and valley folds are alternately repeated, wherein
the second filtration section has a filtration efficiency different from a filtration efficiency of the first filtration section, and
one of the first filtration section and the second filtration section having a lower filtration efficiency is provided at an upstream side.

FIG. 1

11

14

13

12

FIG. 2

11

FIG. 3

FIG.4

FIG.5

10-1                    10-2

(A)                    (B)

# FIG. 6

FIG. 7

EP 4 424 400 A1

FIG. 8

20

# INTERNATIONAL SEARCH REPORT

International application No.

**PCT/JP2022/038989**

### A. CLASSIFICATION OF SUBJECT MATTER

***B01D 39/16***(2006.01)i; ***B01D 46/52***(2006.01)i; ***B01D 46/62***(2022.01)i
FI:    B01D39/16 A; B01D46/52 Z; B01D46/62

According to International Patent Classification (IPC) or to both national classification and IPC

### B. FIELDS SEARCHED

Minimum documentation searched (classification system followed by classification symbols)

B01D39/00-41/04, B01D46/00-46/90

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 6831132 B1 (YAMASHIN FILTER CORP) 17 February 2021 (2021-02-17) paragraphs [0020], [0027], [0028], [0037]-[0046], example 6, fig. 1 | 1, 3-4, 6 |
| Y | US 2003/0010002 A1 (JOHNSON, Bruce A.) 16 January 2003 (2003-01-16) paragraphs [0002], [0008], [0021], [0024], [0030], [0033], [0035], [0055], [0071], [0072], fig. 6-8 | 1, 3-4, 6 |
| A | WO 2013/051185 A1 (PANASONIC CORPORATION) 11 April 2013 (2013-04-11) | 1-6 |
| A | US 2016/0038864 A1 (CLARCOR ENGINE MOBILE SOLUTIONS) 11 February 2016 (2016-02-11) | 1-6 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/038989**

| Patent document cited in search report | | | Publication date (day/month/year) | Patent family member(s) | | | Publication date (day/month/year) |
|---|---|---|---|---|---|---|---|
| JP | 6831132 | B1 | 17 February 2021 | WO | 2021/125157 | A1 | |
| US | 2003/0010002 | A1 | 16 January 2003 | (Family: none) | | | |
| WO | 2013/051185 | A1 | 11 April 2013 | JP | 2013-78708 | A | |
| | | | | JP | 2013-31828 | A | |
| | | | | JP | 2013-99737 | A | |
| | | | | CN | 103732302 | A | |
| US | 2016/0038864 | A1 | 11 February 2016 | WO | 2016/022758 | A1 | |
| | | | | CN | 106573191 | A | |

Form PCT/ISA/210 (patent family annex) (January 2015)

**EP 4 424 400 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008518772 T